# FASCICULE DE BREVET EUROPEEN

(11) **EP 1 074 595 B1**
(45) Date de publication et mention de la délivrance du brevet: **18.10.2006**
(21) Numéro de dépôt: 00402201.8
(22) Date de dépôt: 01.08.2000
(51) Int. Cl.: C09J 7/04, D04H 3/04

(54) **Ruban adhésif comprenant un support tissé en polyester déchirable à la main**
Mit der Hand reissbares Klebeband auf Basis eines Polyestergewebes
Hand-tearable adhesive tape comprising a polyester fabric as backing

(30) Priorité: 02.08.1999 FR 9910029
(43) Date de publication de la demande: 07.02.2001
(73) Titulaire: Scapa Tapes France SA, 01201 Bellegarde sur Valserine Cedex (FR)
(72) Inventeur: Goux, Alain, 01220 Nievroz (FR); Barnet, Rémi, 73000 Chambery (FR)
(74) Mandataire: Rousset, Jean-Claude

(56) Documents cités:
- EP-A1- 0 478 784
- US-A- 4 439 482
- DATABASE WPI Section Ch, Week 198711 Derwent Publications Ltd., London, GB; Class A23, AN 1987-075838 XP002135622 & JP 62 028436 A (ASAHI CHEM IND CO LTD), 6 février 1987 (1987-02-06)
- DATABASE WPI Section Ch, Week 199039 Derwent Publications Ltd., London, GB; Class A23, AN 1990-295020 XP002135623 & JP 02 208385 A (ASAHI CHEM IND CO LTD), 17 août 1990 (1990-08-17)

## Description

L'invention concerne les rubans adhésifs d'une manière générale, et notamment ceux utilisés pour l'enrubannage de faisceaux de câbles, plus particulièrement dans la construction automobile.

Une caractéristique importante d'un ruban adhésif est sa bonne déchirabilité à la main. En effet, pour une application manuelle, la déchirabilité du ruban adhésif permet de s'affranchir de l'utilisation d'un outil coupant, ce qui limite à la fois les risques de blessure et le temps de main d'oeuvre.

La déchirabilité d'un ruban adhésif est liée en grande partie au support, à sa contexture, à son procédé de fabrication mais également à la nature des fibres utilisées. À chaque nature de fibre sont associées des caractéristiques mécaniques et physico-chimiques qui définissent les domaines d'utilisation du ruban adhésif, notamment en termes de température de l'environnement dans lequel le ruban adhésif est placé.

Les tissus de viscose ou de coton, qui sont utilisés couramment depuis de nombreuses années, résistent à des températures de l'ordre de 100 à 125 °C (classe thermique T2 selon la classification adoptée dans l'industrie automobile) et présentent une bonne déchirabilité à la main. Leur résistance à l'abrasion est modérée.

On emploie également des tissus de fibres synthétiques appelées communément fibres de polyester. Les tissus de polyester apportent, de par leur nature chimique et leur aspect, une très bonne résistance à l'abrasion associée à une bonne tenue en température (150 à 175 °C, classe thermique T4). Leur utilisation est donc associée à des applications où des températures élevées sont observées (capots moteurs) et où des frictions sur des parties métalliques sont possibles.

Des procédés de fabrication faisant appel à d'autres techniques que le tissage permettent d'obtenir une bonne déchirabilité à la main avec des fibres de polyester, ce qui permet de maintenir de bonnes caractéristiques de tenue en température (classement T3 dans l'automobile). Il s'agit des techniques de fabrication de supports non tissés du type Maliwatt et du type Malivlies. Des rubans adhésifs utilisant de tels supports non tissés sont décrits dans EP 0668336 A, DE 4442092 A et DE 4442093 A. En revanche, compte tenu du procédé de fabrication, la résistance à l'abrasion de ce type de substrat est inférieure à celle d'une base tissée.

Le tableau 1 rassemble les propriétés des différents types de rubans adhésifs connus réalisés à partir de fibres synthétiques ou naturelles. La classe de température se réfère à la classification automobile.

**Tableau 1**

| | | | | |
|---|---|---|---|---|
| Type de support | Tissé | | Non tissé | |
| Nature des fibres | Viscose ou coton | Polyester | Polyester Maliwatt | Polyester Malivlies |
| Classe de température | T2 (100 °C) | T4 (150 °C) | T3 (125 °C) | T3 (125 °C) |
| Résistance à l'abrasion | ** | *** | * | * |
| Déchirabilité | *** | non | ** | *** |

| | | | | |
|---|---|---|---|---|
| * moyenne ** bonne *** excellente | | | | |

Les rubans adhésifs connus à base de tissu de polyester ne sont pas déchirables à la main contrairement à certains autres produits existant sur le marché. Compte tenu des très bonnes propriétés des tissus de polyester, il existe une réelle demande pour ce type de produit sous une forme déchirable.

Le but de l'invention est de fournir un ruban adhésif à support tissé à base de fibres de polyester ayant la propriété d'être déchirable à la main.

L'invention vise notamment un ruban adhésif comprenant un support tissé à partir de fils formés au moins majoritairement de fibres de polyester, dont les uns s'étendent dans la direction longitudinale du ruban et les autres s'étendent transversalement, et une couche d'adhésif recouvrant au moins une face du support.

L'invention prévoit que le titre des fils longitudinaux par unité de largeur du ruban est inférieur au titre des fils transversaux par unité de longueur du ruban et au plus égal à 2500 dtex/cm, les fils longitudinaux étant maintenus en place dans la direction transversale par l'adhésif, de manière à conférer au ruban un effort de déchirement transversal inférieur à 10 N.

Le titre des fils par unité de largeur ou de longueur est le produit du titre unitaire des fils par le nombre de fils par unité de largeur ou de longueur. L'abaissement de cette caractéristique pour les fils longitudinaux, qui sont normalement les fils de chaîne du tissu constituant le support, réduit l'effort de déchirement transversal, c'est-à-dire l'effort de traction qu'il faut exercer sur le ruban dans la direction longitudinale pour le déchirer selon une ligne transversale à partir d'une entaille existante. Cet effort est usuellement déterminé selon la méthode AFERA 4007. Une valeur inférieure à 10 N permet un déchirement facile à la main.

Il est également nécessaire à cet égard d'immobiliser les fils longitudinaux dans la direction transversale, faute de quoi ils se rapprocheraient les uns des autres, en direction de l'un des bords du ruban, lorsqu'on sollicite l'autre bord en traction pour déchirer le ruban, de sorte qu'il serait nécessaire de rompre plusieurs fils en même temps, ce qui multiplierait l'effort à exercer pour obtenir la rupture. Cette immobilisation est réalisée selon l'invention par la couche d'adhésif recouvrant le support tissé, dont le contact avec chaque fil est continu sur toute la longueur de celui-ci, ou ne présente que des interruptions très courtes.

Avantageusement, les fils transversaux sont relativement serrés, c'est-à-dire nombreux par unité de largeur, ce qui contribue à la stabilité de la position des fils longitudinaux dans la direction latérale.

Pour régler les caractéristiques des fils, on peut agir entre autres sur le nombre de filaments élémentaires composant chacun d'eux.

Des caractéristiques optionnelles de l'invention, complémentaires ou alternatives, sont énoncées ci-après:
- Le titre des fils transversaux par unité de longueur est compris entre 3000 et 4500 dtex/cm.
- Les fils longitudinaux sont plus serrés et ont un titre unitaire plus faible que les fils transversaux.
- Le support comprend entre 30 et 50 fils longitudinaux par cm de largeur.
- Le support comprend entre 18 et 27 fils transversaux par cm de longueur.
- Le titre des fils longitudinaux est compris entre 40 et 60 dtex environ.
- Le titre des fils transversaux est compris entre 150 et 250 dtex.
- Ledit adhésif est sensible à la pression.
- Le support est revêtu d'une couche anti-adhérente sur sa face opposée à l'adhésif.
- Les fils du support sont teintés dans la masse.

Les caractéristiques et avantages de l'invention seront exposés plus en détail dans la description ci-après, en se référant aux dessins annexés.

La figure 1 montre le déplacement des fils d'un ruban de tissu non recouvert d'un adhésif lorsqu'on tente de le déchirer à la main.

La figure 2 montre la rupture des fils longitudinaux d'un ruban adhésif selon l'invention lorsqu'on le déchire à la main.

À titre d'exemple non limitatif, on a réalisé un tissu en utilisant des fils à filaments multiples formés de fibres de polyester, teintés en noir dans la masse par un colorant résistant à une température de 150 °C en continu. Le tissage est réalisé par la méthode du jet d'air ou du jet d'eau, en utilisant 40 fils de chaîne par centimètre, d'un titre unitaire de 50 dtex, et 22 fils de trame par centimètre, d'un titre unitaire de 167 dtex. Le support tissé obtenu est recouvert sur une face d'un adhésif sensible à la pression à base de caoutchouc modifié par des résines, en solution dans le toluène, et sur l'autre face d'un vernis anti-adhérent appliqué par la technique dite "reverse roll" (enduction par transfert cylindre sur cylindre). Un ruban adhésif obtenu en découpant le support ainsi revêtu parallèlement aux fils de chaîne présente une excellente tenue en température (classe thermique T4) et une bonne résistance à l'abrasion.

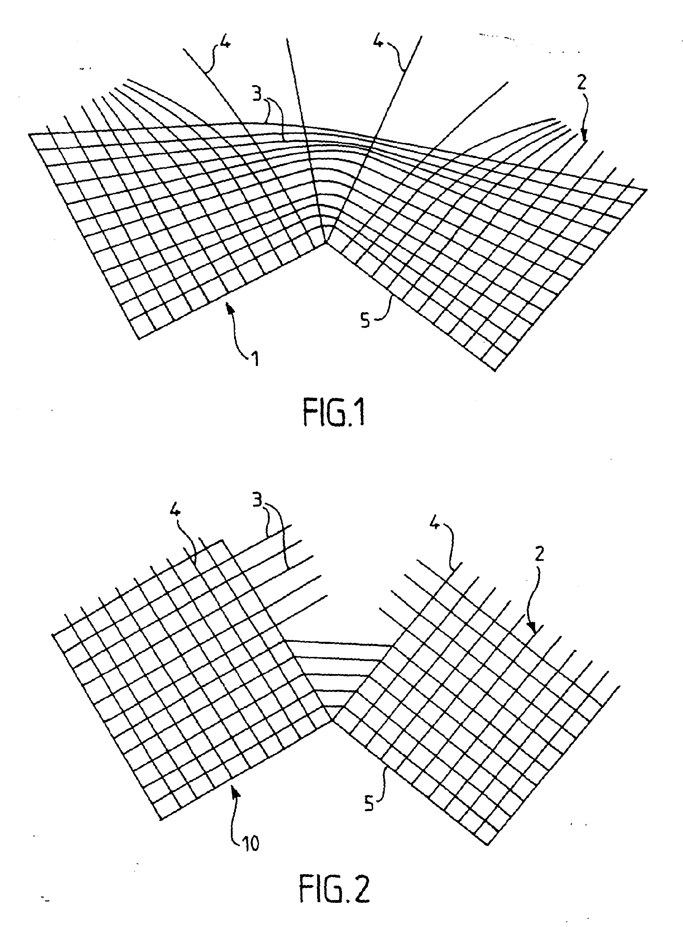

La figure 1 montre le comportement des fils d'un ruban 1 de tissu de polyester non revêtu d'adhésif, et/ou dont les fils transversaux sont peu serrés, lorsqu'on tente de le déchirer à la main en exerçant une traction longitudinale sur l'un de ses bords 2. Les fils longitudinaux 3 voisins du bord 2 sont tendus et se décalent le long des fils transversaux 4 en direction du bord opposé 5, se rapprochant ainsi les uns des autres. Plusieurs fils sont alors soumis simultanément à la traction, ce qui rend leur rupture difficile du fait de l'augmentation du nombre de tex par unité de largeur.

La figure 2, où les mêmes signes de référence que sur la figure 1 sont utilisés pour désigner des éléments semblables, montre le comportement dans les mêmes conditions d'un ruban adhésif 10 selon l'invention. Les fils longitudinaux 3 sont immobilisés dans la direction transversale par la couche d'adhésif et par un faible écartement mutuel des fils transversaux. Ils sont donc sollicités en traction et rompus les uns après les autres.

Le tableau 2 indique l'effort de déchirement transversal déterminé selon la méthode AFERA 4007 pour le ruban adhésif de l'exemple ci-dessus (A) et, à titre de comparaison, pour le support de ce ruban non enduit (B), pour un ruban adhésif à support tissé en fibranne commercialisé par la demanderesse sous la référence 003 (C) et pour un ruban adhésif à support non tissé en polyester disponible dans le commerce (D).

**Tableau 2**

| Ruban | A | B | C | D |
|---|---|---|---|---|
| Effort de déchirement transversal (N) | 3,73 | 12,03 | 6,06 | 8,93 |

Ces résultats font apparaître la meilleure déchirabilité du ruban adhésif de l'invention vis-à-vis tant du support non revêtu d'adhésif que des rubans adhésifs connus.

Le noircissement des fils dans la masse, ou une coloration différente, permet au ruban adhésif selon l'invention de supporter des températures allant jusqu'à 150 °C sans altération de son aspect.

L'adhésif utilisé dans l'invention est avantageusement un adhésif sensible à la pression à base de caoutchouc ou acrylique, en solution dans un solvant organique ou en dispersion dans l'eau, ou bien un adhésif sensible à la pression sans solvant, par exemple du type thermofusible, ou réticulable par rayonnement UV ou par bombardement électronique. L'adhésif peut être appliqué par toute technique connue, par exemple à la racle sur cylindre ou sur plan, cylindre sur cylindre ou au moyen d'une filière pour adhésif thermofusible.

## Revendications

1. Ruban adhésif (10) comprenant un support (1) tissé à partir de fils formés au moins majoritairement de fibres de polyester, dont les uns (3) s'étendent dans la direction longitudinale du ruban et les autres (4) s'étendent transversalement, et une couche d'adhésif recouvrant au moins une face du support, **caractérisé en ce que** le titre des fils longitudinaux par unité de largeur du ruban est inférieur au titre des fils transversaux par unité de longueur du ruban et au plus égal à 2500 dtex/cm, le support comprend entre 30 et 50 fils longitudinaux par cm de largeur que et entre 18 et 27 fils transversaux par cm de longueur, les fils longitudinaux étant maintenus en place dans la direction transversale par l'adhésif, de manière à conférer au ruban un effort de déchirement transversal inférieur à 10 N.

2. Ruban adhésif selon la revendication 1, dans lequel le titre des fils transversaux par unité de longueur est compris entre 3000 et 4500 dtex/cm.

3. Ruban adhésif selon l'une des revendications précédentes, dans lequel les fils longitudinaux sont plus serrés et ont un titre unitaire plus faible que les fils transversaux.

4. Ruban adhésif selon l'une des revendications précédentes, dans lequel le titre des fils longitudinaux est compris entre 40 et 60 dtex environ.

5. Ruban adhésif selon l'une des revendications précédentes, dans lequel le titre des fils transversaux est compris entre 150 et 250 dtex.

6. Ruban adhésif selon l'une des revendications précédentes, dans lequel ledit adhésif est sensible à la pression.

7. Ruban adhésif selon l'une des revendications précédentes, dans lequel le support est revêtu d'une couche anti-adhérente sur sa face opposée à l'adhésif.

8. Ruban adhésif selon l'une des revendications précédentes, dans lequel les fils du support sont teintés dans la masse.

## Claims

1. Adhesive tape (10) comprising a support (1) woven from threads formed at least mostly from polyester fibres, some (3) of which extend in the longitudinal direction of the tape and others (4) extend transversely, and comprising an adhesive coating covering at least one face of the support, **characterised in that** the thread count of the longitudinal threads per unit of width of the tape is less than the thread count of the transverse threads per unit of length of the tape and is at most equal to 2500 dtex/cm, **in that** the support comprises between 30 and 50 longitudinal threads per cm of width and between 18 and 27 transverse threads per cm of length, the longitudinal threads being held in place in the transverse direction by the adhesive so as to impart to the tape a transverse tearing force of less than 10 N.

2. Adhesive tape according to claim 1, wherein the thread count of the transverse threads per unit length is between 3000 and 4500 dtex/cm.

3. Adhesive tape according to either of the preceding claims, wherein the longitudinal threads are closer and have a unit thread count which is less than that of the transverse threads.

4. Adhesive tape according to one of the preceding claims, wherein the thread count of the longitudinal threads is between about 40 and 60 dtex.

5. Adhesive tape according to one of the preceding claims, wherein the thread count of the transverse threads is between 150 and 250 dtex.

6. Adhesive tape according to one of the preceding claims, wherein the adhesive is sensitive to pressure.

7. Adhesive tape according to one of the preceding claims, wherein the support is coated with a non-stick coating on its face opposite to the adhesive.

8. Adhesive tape according to one of the preceding claims, wherein the threads of the support are dyed in bulk.

## Patentansprüche

1. Klebeband (10), enthaltend einen gewebten Träger (1) aus Fäden, die wenigstens maßgeblich aus Polyesterfasern bestehen, von denen die einen (3) sich in Längsrichtung des Bandes und die anderen (4) sich quer dazu erstrecken, und eine Klebstoffschicht, die wenigstens eine Seite des Trägers bedeckt, **dadurch gekennzeichnet, dass** der Titer der Längsfäden pro Breiteneinheit des Bandes kleiner als der Titer der Querfäden pro Längeneinheit des Bandes und höchstens gleich 2.500 dtex/cm ist, dass der Träger zwischen 30 und 50 Längsfäden pro Zentimeter Breite und zwischen 18 und 27 Querfäden pro Zentimeter Länge aufweist, und die Längsfäden in Querrichtung durch den Klebstoff an ihrem Platz festgelegt sind, so dass dem Band eine Reißfestigkeit in Querrichtung von weniger als 10 N verliehen ist.

2. Klebeband nach Anspruch 1, bei dem der Titer der Querfäden pro Längeneinheit zwischen 3.000 und 4.500 dtex/cm liegt.

3. Klebeband nach einem der vorhergehenden Ansprüche, bei dem die Längsfäden mehr zusammengedrängt sind und einen Einheitstiter haben, der kleiner als der der Querfäden ist.

4. Klebeband nach einem der vorhergehenden Ansprüche, bei dem der Titer der Längsfäden zwischen etwa 40 und etwa 60 dtex liegt.

5. Klebeband nach einem der vorhergehenden Ansprüche, bei dem der Titer der Querfäden zwischen 150 und 250 dtex liegt.

6. Klebeband nach einem der vorhergehenden Ansprüche, bei dem der Klebstoff auf Druck empfindlich ist.

7. Klebeband nach einem der vorhergehenden Ansprüche, **dadurch gekennzeichnet, dass** der Träger mit einer Antihaftschicht auf seiner dem Klebstoff abgewandten Seite bedeckt ist.

8. Klebeband nach einem der vorhergehenden Ansprüche, bei dem die Fäden des Trägers in der Masse gefärbt sind.
